# EUROPÄISCHE PATENTSCHRIFT

(11) **EP 1 745 234 B1**
(45) Veröffentlichungstag und Bekanntmachung des Hinweises auf die Patenterteilung: **11.03.2009**
(21) Anmeldenummer: 03819142.5
(22) Anmeldetag: 24.12.2003
(51) Int. Cl.: F16L 33/22, F16L 19/065

(54) **SCHLAUCHKLEMMEN-VORRICHTUNG**
HOSE CLAMPING DEVICE
DISPOSITIF DE SERRAGE D'UN TUYAU

(43) Veröffentlichungstag der Anmeldung: 24.01.2007
(73) Patentinhaber: GARDENA Manufacturing GmbH, 89079 Ulm (DE)
(72) Erfinder: LINDERMEIR, Wolfgang, 89617 Untermarchtal (DE)
(86) Internationale Anmeldenummer: PCT/DE2003/004265
(87) Internationale Veröffentlichungsnummer: WO 2005/061938

(56) Entgegenhaltungen:
- EP-A- 1 004 808
- DE-A- 1 625 961
- DE-C- 723 967
- US-A- 5 558 375

## Beschreibung

Die Erfindung betrifft eine Klemm-Vorrichtung zur Befestigung an einem Ende eines Schlauches, mit einem Grundkörper und einer Fixiereinrichtung zum Fixieren eines Schlauchendes an dem Grundkörper sowie einer Klemmeinrichtung zum Befestigen des Grundkörpers an einem Anschlussstück einer anderen Vorrichtung, mit der das Schlauchende über den Grundkörper wasserdicht lösbar verbindbar ist.

Klemm-Vorrichtungen der eingangs genannten Art werden im Stand der Technik verwendet, um wasserführende Schläuche einerseits an Wasserhähne und andererseits an Nutzvorrichtungen wie Sprinkler oder Abgabedüsen zu koppeln. Die bekannten Klemm-Vorrichtungen weisen jedoch zum einen den Nachteil auf, dass für eine sichere Funktion notwendig elastische Bauteile aus dem gleichen eher notwendig formbeständigen und festen Material wie ein Grundkörper hergestellt sind, wodurch ein schneller Verschleiß vorgegeben ist, und zum anderen, dass sie verlierbare Bauteile zum Sichern eines Schlauches aufweisen und somit ein sicherer Gebrauch nicht immer ermöglicht ist. Eine Klemm-Vorrichtung gemäß dem Oberbegriff des Anspruchs 1 ist aus

der Druckschrift US-A-5 558 375 bekannt.

Aufgabe der Erfindung ist es deshalb, eine Klemm-Vorrichtung zu schaffen, mittels derer ein sicherer und verschleißfreier Gebrauch ermöglicht ist.

Für eine Vorrichtung der eingangs genannten Art wird diese Aufgabe dadurch gelöst, dass die Fixiereinrichtung eine an dem Grundkörper arretiert gelagerte Spannzange enthält, die einen elastischen Teil aufweist, der bei radialem Druck auf mindestens einen mit dem elastischen Teil verbundenen Nocken in Richtung auf die Außenfläche eines Endbereiches eines Schlauches zu bewegbar ist, wobei der elastische Teil schlauchseitig in eine hohlzylindrisch ausgebildete Schlauchführung übergeht, entlang deren Innenfläche ein Schlauchendbereich in Richtung auf den Grundkörper zu einführbar ist, und wobei ein Klemmelement entlang der Außenfläche der Schlauchführung reziprozierbar verschiebbar angeordnet ist, das eine mit dem mindestens einen Nocken zusammenwirkende Angriffsfläche aufweist.

Bevorzugte Ausführungsformen der Erfindung sind Gegenstand der Unteransprüche.

Bei der erfindungsgemäßen Vorrichtung wird durch die Merkmalskombination, dass die Fixiereinrichtung eine an dem Grundkörper arretiert gelagerte Spannzange enthält, die einen elastischen Teil aufweist, der bei radialem Druck auf mindestens einen mit dem elastischen Teil verbundenen Nocken in Richtung auf die Außenfläche eines Endbereiches eines Schlauches zu bewegbar ist, wobei der elastische Teil schlauchseitig in eine hohlzylindrisch ausgebildete Schlauchführung übergeht, entlang deren Innenfläche ein Schlauchendbereich in Richtung auf den Grundkörper zu einführbar ist, und wobei ein Klemmelement entlang der Außenfläche der Schlauchführung reziprozierbar verschiebbar angeordnet ist, das eine mit dem mindestens einen Nocken zusammenwirkende Angriffsfläche aufweist, erreicht, dass eine Vorrichtung geschaffen ist, bei der die Spannzange eine von dem Grundkörper getrennte Einheit bildet und somit insgesamt oder teilweise aus einem von dem Grundkörper verschiedenen vorzugsweise geeigneten elastischen Material herstellbar ist .

Gemäß einer ersten bevorzugten Ausführungsform der erfindungsgemäßen Vorrichtung ist vorgesehen, dass der elastische Teil der Spannzange von einer Mehrzahl elastischer Lamellen gebildet ist, wobei vorzugsweise jede Lamelle mit einem Nocken versehen ist.

Gemäß einer anderen bevorzugten Ausführungsform der erfindungsgemäßen Vorrichtung ist vorgesehen, dass der Grundkörper im Bereich des elastischen Teils der Spannzange einen hohlzylindrischen Vorsprung aufweist, dessen Außendurchmesser an den Innendurchmesser eines Schlauchendes angepasst ist. Der Vorsprung wirkt vorzugsweise als inneres Abstützelement für ein Schlauchende, wenn der elastische Teil der Spannzange von einer radial auf den mindestens einen Nocken wirkenden Kraft in Richtung auf die Außenfläche des Schlauchendes zu gedrückt wird.

Gemäß der erfindungsgemäßen Vorrichtung ist vorgesehen, dass die Angriffsfläche des Klemmelementes als hohlkonischer Abschnitt des im übrigen hohlzylindrischen Klemmelementes ausgebildet ist. Das Klemmelement ist als Überwurfmutter ausgebildet, die ein mit einem Außengewinde des Grundkörpers zusammenwirkendes Innengewinde aufweist.

Gemäß einer weiteren bevorzugten Ausführungsform der erfindungsgemäßen Vorrichtung ist vorgesehen, dass der elastische Teil im Bereich des mindestens einen Nockens ein oder mehr Angriffelemente aufweist, die bei einer auf den mindestens einen Nocken radial wirkenden Kraft an die Außenfläche eines Schlauchende angreifen. Ein Angriffelement ist dabei vorzugsweise als mindestens eine Kante aufweisende Umlaufnut ausgebildet.

Gemäß einer weiteren bevorzugten Ausführungsform der erfindungsgemäßen Vorrichtung ist vorgesehen, dass die Spannzange an ihrem der Schlauchführung fernen Ende eine Kante aufweist, die zum Zweck einer Arretierung der Spannzange an dem Grundkörper an einen an dem Grundkörper ausgebildeten Vorsprung angrenzt. Die Kante kann beispielsweise an einem Ringelement ausgebildet sein, das an dem der Schlauchführung fernen Ende des elastischen Teils der Spannzange vorgesehen ist.

Gemäß einer wichtigen bevorzugten Ausführungsform der erfindungsgemäßen Vorrichtung ist vorgesehen, dass die Spannzange zwischen zwei vorgegebenen Endpositionen bezüglich des Grundkörpers axial verschiebbar angeordnet ist, wobei der mindestens eine Nocken in einer zweiten Endposition radial weiter in Richtung auf die Außenfläche eines Schlauchendbereiches zu bewegt ist als in einer ersten Endposition. Die Kante des Ringelementes grenzt in der zweiten Endposition der Spannzange an den an dem Grundkörper ausgebildeten Vorsprung an, wobei das Ringelement in der ersten Endposition mit einer Stirnfläche an eine dem Vorsprung gegenüberstehenden Anschlagfläche angrenzt. Dadurch wird erreicht, dass ein Schlauch bei einer entsprechenden durch Zug oder Druck verursachten Bewegung noch fester zwischen Spannzange und Grundkörper eingeklemmt wird.

Gemäß der erfindungsgemäßen Vorrichtung ist vorgesehen, dass die Überwurfmutter im Bereich ihres dem Innengewinde fernen Endes eine Kante aufweist, die zum Zweck einer Arretierung der Überwurfmutter an der Spannzange an einen an der Spannzange ausgebildeten Vorsprung angrenzt. Die Kante kann beispielsweise an der Innenwandung der Überwurfmutter ausgebildet sein, wobei der Vorsprung an der Außenfläche der Schlauchführung der Spannzange vorgesehen ist. Alternativ kann die Kante von einer Stirnflache der Überwurfmutter gebildet sein, wobei der Vorsprung beispielsweise als Umlaufring an der Außenfläche der Schlauchführung der Spannzange ausgebildet ist.

Die erfindungsgemäße Vorrichtung wird im folgenden anhand einer bevorzugten Ausführungsform erläutert, die in den Figuren der Zeichnung dargestellt ist. Darin zeigen:
- Fig. 1: eine erste bevorzugte Ausführungsform der erfindungsgemäßen Vorrichtung in einer Ansicht von schräg oben;
- Fig. 2: die in Fig. 1 dargestellte bevorzugte Ausführungsform der erfindungsgemäßen Vorrichtung in einer ersten Position der Spannzange in einer Querschnittsansicht;
- Fig. 3: die in Fig. 1 dargestellte bevorzugte Ausführungsform der erfindungsgemäßen Vorrichtung in einer weiteren Position der Spannzange in einer Querschnittsansicht;
- Fig. 4: die in Fig. 1 dargestellte bevorzugte Ausführungsform der erfindungsgemäßen Vorrichtung in einer weiteren Position der Spannzange in einer Querschnittsansicht;
- Fig. 5: die in Fig. 1 dargestellte bevorzugte Ausführungsform der erfindungsgemäßen Vorrichtung in einer weiteren Position der Spannzange in einer Querschnittsansicht;
- Fig. 6: die in Fig. 1 dargestellte bevorzugte Ausführungsform der erfindungsgemäßen Vorrichtung in einer weiteren Position der Spannzange in einer Querschnittsansicht.
- Fig. 7: die in Fig. 1 dargestellte bevorzugte Ausführungsform der erfindungsgemäßen Vorrichtung in einer weiteren Position der Spannzange in einer Querschnittsansicht.
- Fig. 8: die in Fig. 1 dargestellte bevorzugte Ausführungsform der erfindungsgemäßen Vorrichtung in einer weiteren Position der Spannzange in einer Querschnittsansicht.
- Fig. 9: die in Fig. 1 dargestellte bevorzugte Ausführungsform der erfindungsgemäßen Vorrichtung in einer weiteren Position der Spannzange in einer Querschnittsansicht.

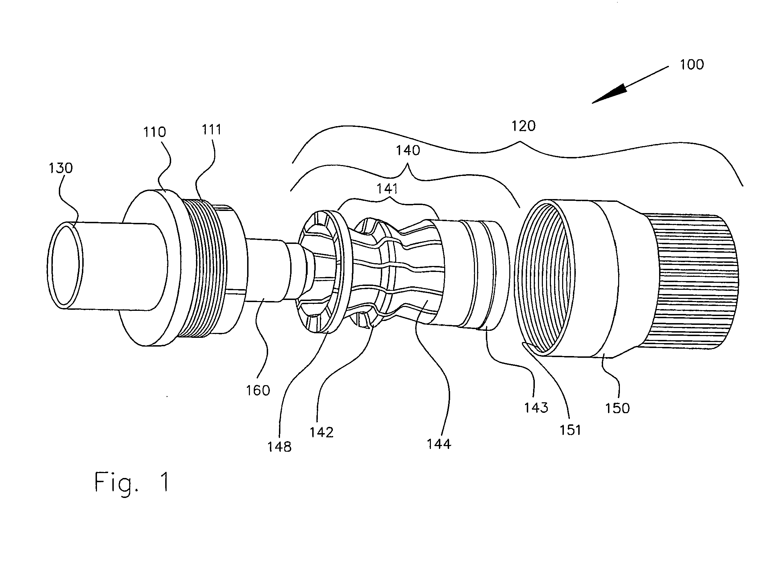

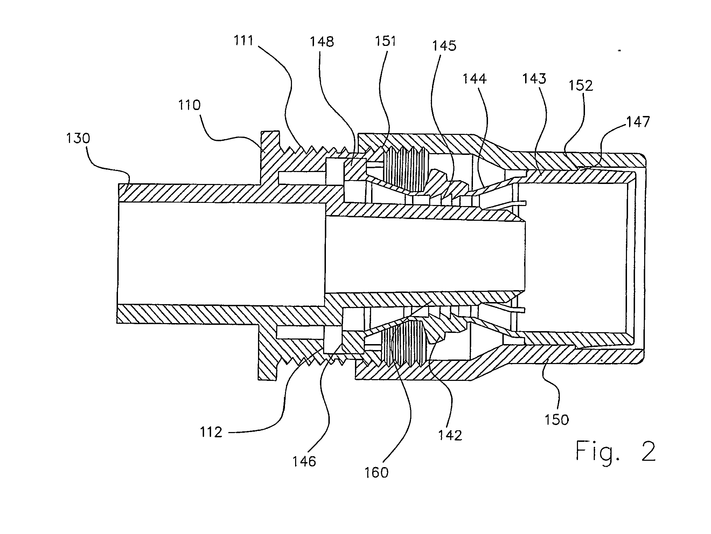

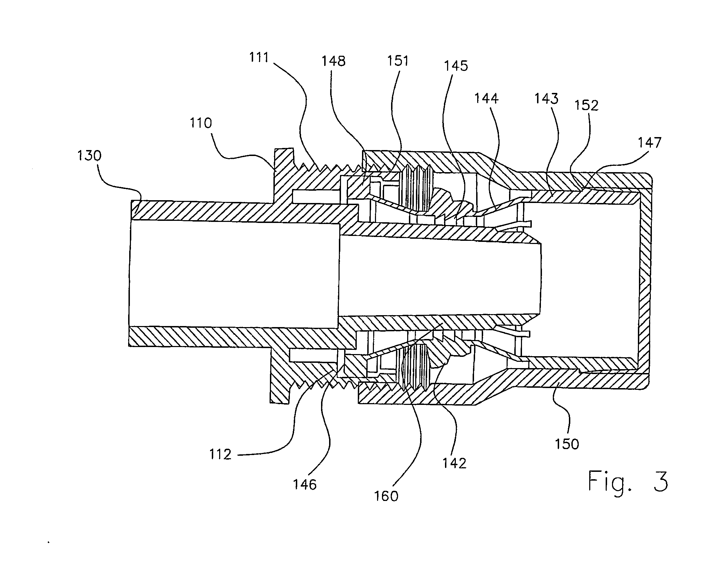

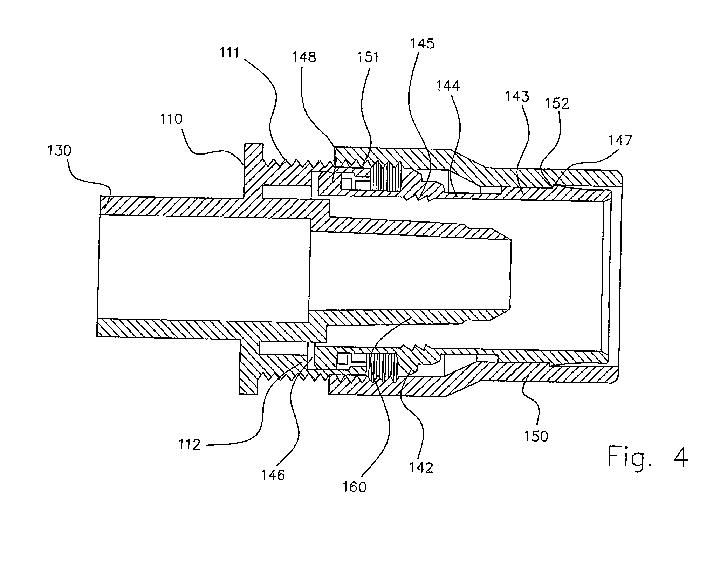

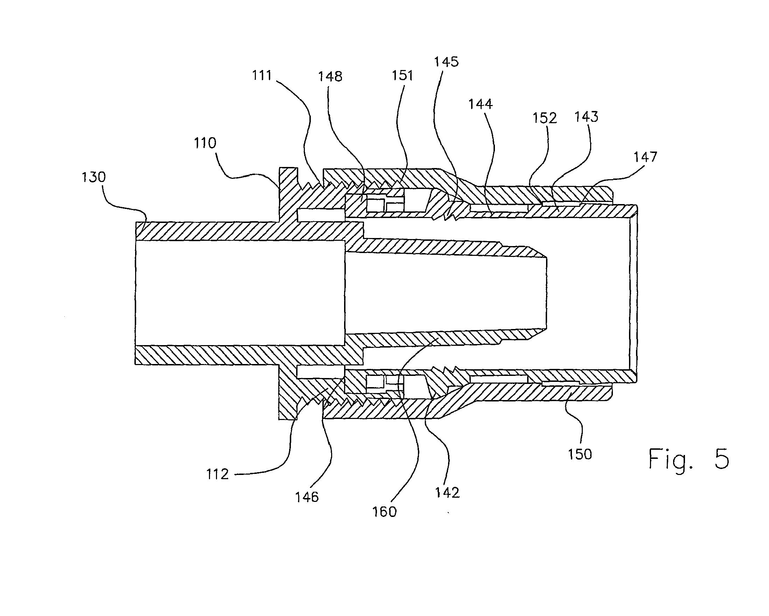

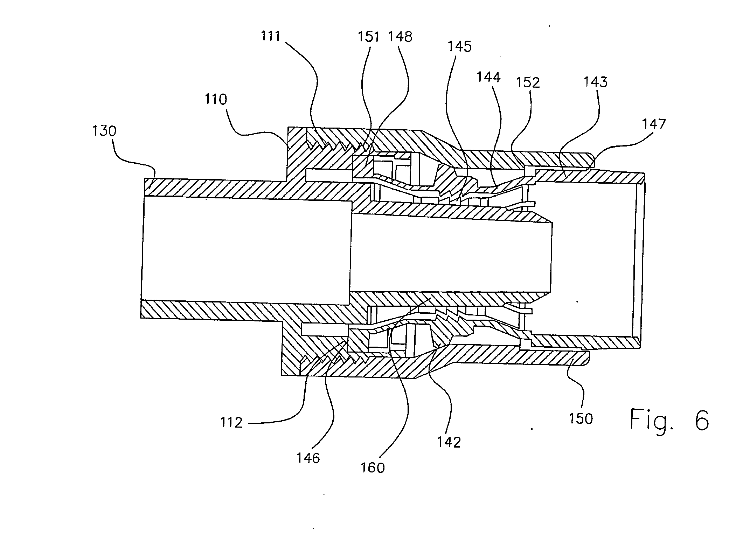

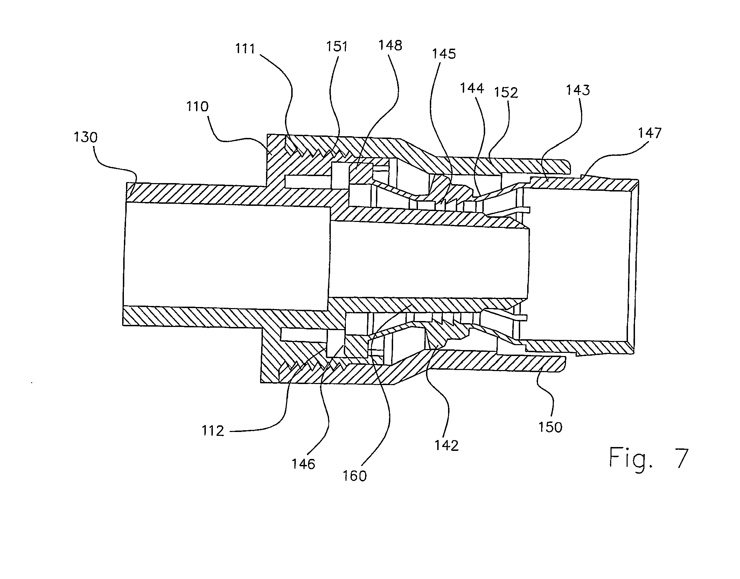

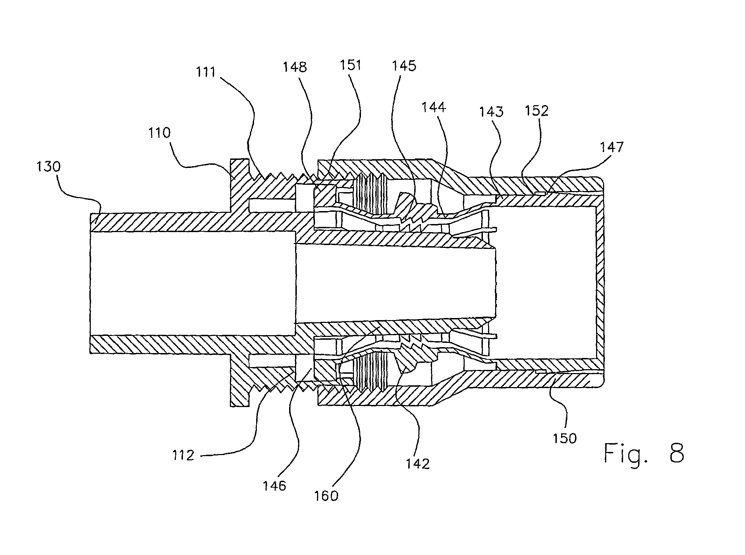

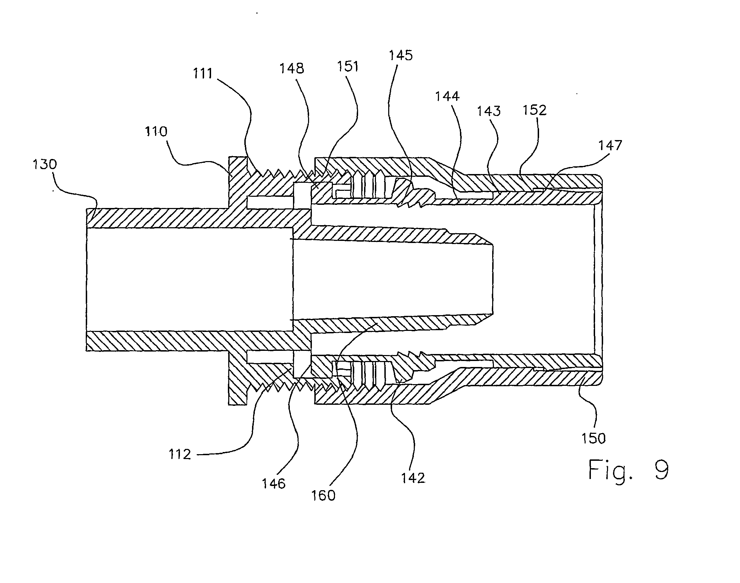

Die in den Figuren 1 bis 9 dargestellte erfindungsgemäße Klemm-Vorrichtung 100 zur Befestigung an einem Ende eines Schlauches enthält einen Grundkörper 110 mit einer Fixiereinrichtung 120 zum Fixieren eines Schlauchendes an dem Grundkörper 110 sowie eine Klemmeinrichtung 130 zum Befestigen des Grundkörpers 110 an einem Anschlussstück einer anderen Vorrichtung, mit der das Schlauchende über den Grundkörper 110 wasserdicht lösbar verbindbar ist. Erfindungswesentlich enthält die Fixiereinrichtung 120 eine an dem Grundkörper 110 arretiert gelagerte Spannzange 140, die einen elastischen Teil 141 aufweist, der bei radialem Druck auf mindestens einen mit dem elastischen Teil 141 verbundenen Nocken 142 in Richtung auf die Außenfläche eines Endbereiches eines Schlauches zu bewegbar ist, wobei der elastische Teil 141 schlauchseitig in eine hohlzylindrisch ausgebildete Schlauchführung 143 übergeht, entlang deren Innenfläche ein Schlauchendbereich in Richtung auf den Grundkörper 110 zu einführbar ist, und wobei ein Klemmelement 150 entlang der Außenfläche der Schlauchführung 143 reziprozierbar verschiebbar angeordnet ist, das eine mit dem mindestens einen Nocken 142 zusammenwirkende Angriffsfläche aufweist. Der elastische Teil 141 der Spannzange 140 ist von einer Mehrzahl elastischer Lamellen 144 gebildet, wobei jede Lamelle 144 mit einem Nocken 142 versehen ist.

Der Grundkörper 110 weist im Bereich des elastischen Teils 141 der Spannzange 140 einen hohlzylindrischen Vorsprung 160 auf, dessen Außendurchmesser an den Innendurchmesser eines Schlauchendes angepasst ist. Dieser Vorsprung 160 wirkt als inneres Abstützelement für ein Schlauchende, wenn der elastische Teil 141 der Spannzange 140 von einer radial auf den mindestens einen Nocken 142 wirkenden Kraft in Richtung auf die Außenfläche des Schlauchendes zu gedrückt wird.

Die Angriffsfläche des Klemmelementes 150 ist als hohlkonischer Abschnitt des im übrigen hohlzylindrischen Klemmelementes 150 ausgebildet, wobei das Klemmelement 150 als Überwurfmutter ausgebildet ist, die ein mit einem Außengewinde 111 des Grundkörpers 110 zusammenwirkendes Innengewinde 151 aufweist.

Jede einzelne der Mehrzahl von elastischen Lamellen 144 des elastischen Teils 141 weist im Bereich des mindestens einen Nockens 142 ein oder mehr Angriffelemente 145 auf, die bei einer auf den mindestens einen Nocken 142 radial wirkenden Kraft an die Außenfläche eines Schlauchende angreifen. Ein Angriffelement 145 ist dabei als drei parallele Kanten aufweisende Umlaufnute ausgebildet.

Die Spannzange 140 weist an ihrem der Schlauchführung 143 fernen Ende eine Kante 146 auf, die zum Zweck einer Arretierung der Spannzange 140 an dem Grundkörper 110 an einen an dem Grundkörper 110 ausgebildeten Vorsprung 112 angrenzt. Die Kante 146 ist an einem Ringelement 148 ausgebildet, das an dem der Schlauchführung 143 fernen Ende des elastischen Teils 141 der Spannzange 140 vorgesehen ist.

Des weiteren ist die Spannzange 140 zwischen zwei vorgegebenen Endpositionen bezüglich des Grundkörpers 110 axial verschiebbar angeordnet, wobei ein Nocken 142 in einer zweiten Endposition radial weiter in Richtung auf die Außenfläche eines Schlauchendbereiches zu bewegt ist als in einer ersten Endposition. Die Kante 146 des Ringelementes 148 grenzt dabei in der zweiten Endposition der Spannzange 140 an den an dem Grundkörper 110 ausgebildeten Vorsprung 112 an, und das Ringelement 148 grenzt in der ersten Endposition mit einer Stirnfläche an eine dem Vorsprung 112 gegenüberstehenden Anschlagfläche an.

Die Überwurfmutter 150 weist im Bereich ihres dem Innengewinde 151 fernen Endes eine Kante 152 auf, die zum Zweck einer Arretierung der Überwurfmutter 150 an der Spannzange 140 an einen an der Spannzange 140 ausgebildeten Vorsprung 147 angrenzt. Die Kante 152 ist an der Innenwandung der Überwurfmutter 150 ausgebildet, wobei der Vorsprung 147 an der Außenfläche der Schlauchführung 143 der Spannzange 140 vorgesehen ist.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Klemm-Vorrichtung (100) zur Befestigung an einem Ende eines Schlauches, mit einem Grundkörper (110) und einer Fixiereinrichtung (120) zum Fixieren eines Schlauchendes an dem Grundkörper (110) sowie einer Klemmeinrichtung (130) zum Befestigen des Grundkörpers (110) an einem Anschlussstück einer anderen Vorrichtung, mit der das Schlauchende über den Grundkörper (110) wasserdicht lösbar verbindbar ist, die Fixiereinrichtung (120) eine an dem Grundkörper (110) arretiert gelagerte Spannzange (140) enthält, die einen elastischen Teil (141) aufweist, der bei radialem Druck auf mindestens einen mit dem elastischen Teil (141) verbundenen Nocken (142) in Richtung auf die Außenfläche eines Endbereiches eines Schlauches zu bewegbar ist, wobei der elastische Teil (141) schlauchseitig in eine- hohlzylindrisch ausgebildete Schlauchführung (143) übergeht, entlang deren Innenfläche ein Schlauchendbereich in Richtung auf den Grundkörper (110) zu einführbar ist, und wobei ein Klemmelement (150) entlang der Außenfläche der Schlauchführung (143) reziprozierbar verschiebbar angeordnet ist, das eine mit dem mindestens einen Nocken (142) zusammenwirkende Angriffsfläche aufweist und das als Überwurfmutter ausgebildet ist, die ein mit einem Außengewinde (111) des Grundkörpers (110) zusammenwirkendes Innengewinde (151) aufweist, **dadurch gekennzeichnet, dass** die Angriffsfläche des Klemmelementes (150) als hohlkonischer Abschnitt des im übrigen hohlzylindrischen Klemmelementes (150) ausgebildet ist, wobei die Überwurfmutter (150) im Bereich ihres dem Innengewinde (151) fernen Endes eine Kante (152) aufweist, die zum Zweck einer Arretierung der Überwurfmutter (150) an der Spannzange (140) in der dem Grundkörper (110) entgegengesetzten Richtung an einen an der Spannzange (140) ausgebildeten Vorsprung (147) angrenzt.

2. Vorrichtung nach Anspruch 1, **dadurch gekennzeichnet, dass** der elastische Teil (141) der Spannzange (140) von einer Mehrzahl elastischer Lamellen (144) gebildet ist.

3. Vorrichtung nach Anspruch 2, **dadurch gekennzeichnet, dass** jede Lamelle (144) mit einem Nocken (142) versehen ist.

4. Vorrichtung nach einem oder mehr der vorhergehenden Ansprüche, **dadurch gekennzeichnet, dass** der Grundkörper (110) im Bereich des elastischen Teils (141) der Spannzange (140) einen hohlzylindrischen Vorsprung (160) aufweist, dessen Außendurchmesser an den Innendurchmesser eines Schlauchendes angepasst ist.

5. Vorrichtung nach Anspruch 4, **dadurch gekennzeichnet, dass** der Vorsprung (160) als inneres Abstützelement für ein Schlauchende wirkt, wenn der elastische Teil (141) der Spannzange (140) von einer radial auf den mindestens einen Nocken (142) wirkenden Kraft in Richtung auf die Außenfläche des Schlauchendes zu gedrückt wird.

6. Vorrichtung nach einem oder mehr der vorhergehenden Ansprüche, **dadurch gekennzeichnet, dass** der elastische Teil (141) im Bereich des mindestens einen Nockens (142) ein oder mehr Angriffelemente (145) aufweist, die bei einer auf den mindestens einen Nocken (142) radial wirkenden Kraft an die Außenfläche eines Schlauchende angreifen.

7. Vorrichtung nach Anspruch 6, **dadurch gekennzeichnet, dass** ein Angriffelement (145) als mindestens eine Kante aufweisende Umlaufnute ausgebildet ist.

8. Vorrichtung nach einem oder mehr der vorhergehenden Ansprüche, **dadurch gekennzeichnet, dass** die Spannzange (140) an ihrem der Schlauchführung (143) fernen Ende eine Kante (146) aufweist, die zum Zweck einer Arretierung der Spannzange (140) an dem Grundkörper (110) an einen an dem Grundkörper (110) ausgebildeten Vorsprung (112) angrenzt.

## Claims

1. Clamping device (100) for fastening to an end of a hose, having a basic body (110) and a fixing means (120) for fixing a hose end to the basic body (110), and having a clamping means (130) for fastening the basic body (110) to a connection piece of another device, to which the hose end can be detachably connected via the basic body (110) in a watertight manner, the fixing means (120) contains a collet (140) which is mounted on the basic body (110) in a locked manner and has an elastic part (141) which can be moved in the direction of the outer surface of an end region of a hose during radial pressure on at least one lug (142) connected to the elastic part (141), wherein the elastic part (141) merges on the hose side into a hollow-cylindrical hose guide (143), along the inner surface of which a hose end region can be inserted in the direction of the basic body (110), and wherein a clamping element (150) is arranged such as to be reciprocally displaceable along the outer surface of the hose guide (143), which clamping element (150) has an engagement surface interacting with the at least one lug (142) and is designed as a cap nut which has an internal thread (151) interacting with an external thread (111) of the basic body (110), **characterized in that** the engagement surface of the clamping element (150) is designed as a hollow-conical section of the otherwise hollow-cylindrical clamping element (150), wherein the cap nut (150), in the region of its end remote from the internal thread (151), has an edge (152) which, for the purpose of locking the cap nut (150) on the collet (140), adjoins, in the opposite direction to the basic body (110), a projection (147) formed on the collet (140).

2. Device according to Claim 1, **characterized in that** the elastic part (141) of the collet (140) is formed by a plurality of elastic lamellae (144).

3. Device according to Claim 2, **characterized in that** each lamella (144) is provided with a lug (142).

4. Device according to one or more of the preceding claims, **characterized in that** the basic body (110), in the region of the elastic part (141) of the collet (140), has a hollow-cylindrical projection (160), the outside diameter of which is adapted to the inside diameter of a hose end.

5. Device according to Claim 4, **characterized in that** the projection (160) acts as an inner supporting element for a hose end when the elastic part (141) of the collet (140) is pressed towards the outer surface of the hose end by a force acting radially on the at least one lug (142).

6. Device according to one or more of the preceding claims, **characterized in that** the elastic part (141), in the region of the at least one lug (142), has one or more engagement elements (145) which act on the outer surface of a hose end during a force acting radially on the at least one lug (142).

7. Device according to Claim 6, **characterized in that** an engagement element (145) is designed as a circumferential groove having at least one edge.

8. Device according to one or more of the preceding claims, **characterized in that** the collet (140), at its end remote from the hose guide (143), has an edge (146) which, for the purpose of locking the collet (140) on the basic body (110), adjoins a projection (112) formed on the basic body (110).

## Revendications

1. Dispositif de serrage (100) à fixer à une extrémité d'un tuyau, avec un corps de base (110) et un système de fixation (120) pour fixer une extrémité de tuyau au corps de base (110) ainsi qu'avec un système de serrage (130) pour fixer le corps de base (110) à une pièce de raccordement d'un autre dispositif, avec lequel l'extrémité de tuyau peut être assemblée de manière séparable et étanche à l'eau au moyen du corps de base (110), le système de fixation (120) comprend une pince de serrage (140) appuyée en position bloquée contre le corps de base (110), qui présente une partie élastique (141) qui, sous une pression radiale exercée sur au moins une came (142) reliée à la partie élastique (141), est mobile en direction de la surface extérieure d'une région d'extrémité d'un tuyau, dans lequel la partie élastique (141) se termine du côté du tuyau par un guide de tuyau (143) de forme cylindrique creuse, le long de la surface intérieure duquel une région d'extrémité de tuyau peut être introduite en direction du corps de base (110), et dans lequel un élément de serrage (150) est disposé de façon mobile en mouvement réciproque le long de la surface extérieure du guide de tuyau (143), élément qui présente une surface d'attaque coopérant avec l'au moins une came (142) et qui est réalisé sous la forme d'un écrou de raccord qui présente un filet intérieur (151) coopérant avec un filet extérieur (111) du corps de base (110), **caractérisé en ce que** la surface d'attaque de l'élément de serrage (150) est réalisée sous la forme d'une partie conique creuse de l'élément de serrage (150), par ailleurs cylindrique creux, dans lequel l'écrou de raccord (150) présente dans la région de son extrémité éloignée du filet intérieur (151) une arête (152), qui bute contre une saillie (147) formée sur la pince de serrage (140) dans le but de bloquer l'écrou de raccord (150) sur la pince de serrage (140) dans la direction opposée au corps de base (110).

2. Dispositif selon la revendication 1, **caractérisé en ce que** la partie élastique (141) de la pince de serrage (140) est formée d'une pluralité de lamelles élastiques (144).

3. Dispositif selon la revendication 2, **caractérisé en ce que** chaque lamelle (144) est pourvue d'une came (142).

4. Dispositif selon l'une quelconque des revendications précédentes, **caractérisé en ce que** le corps de base (110) présente dans la région de la partie élastique (141) de la pince de serrage (140) une saillie cylindrique creuse (160), dont le diamètre extérieur est adapté au diamètre intérieur d'une extrémité de tuyau.

5. Dispositif selon la revendication 4, **caractérisé en ce que** la saillie (160) agit comme un élément d'appui intérieur pour une extrémité de tuyau, lorsque la partie élastique (141) de la pince de serrage (140) est pressée par une force agissant radialement sur l'au moins une came (142) en direction de la surface extérieure de l'extrémité de tuyau.

6. Dispositif selon une ou plusieurs des revendications précédentes, **caractérisé en ce que** la partie élastique (141) présente dans la région de l'au moins une came (142) un ou plusieurs éléments d'attaque (145), qui agissent sur la surface extérieure d'une extrémité de tuyau sous une force agissant radialement sur l'au moins une came (142).

7. Dispositif selon la revendication 6, **caractérisé en ce qu'**un élément d'attaque (145) est constitué par une rainure périphérique présentant au moins une arête.

8. Dispositif selon une ou plusieurs des revendications précédentes, **caractérisé en ce que** la pince de serrage (140) présente à son extrémité éloignée du guide de tuyau (143) une arête (146), qui bute contre une saillie (112) formée sur le corps de base (110) afin de bloquer la pince de serrage (140) sur le corps de base (110).
